Europäisches Patentamt

**European Patent Office**

Office européen des brevets

(19)

(11) Veröffentlichungsnummer: **0 143 897**
**B1**

(12) EUROPÄISCHE PATENTSCHRIFT

(45) Veröffentlichungstag der Patentschrift:
01.04.87

(51) Int. Cl.⁴: **B 65 G 59/04**, B 65 G 47/90

(21) Anmeldenummer: **84109794.2**

(22) Anmeldetag: **17.08.84**

(54) **Vorrichtung zur automatischen Entnahme von Gegenständen aus Behältern.**

(30) Priorität: **07.09.83 DE 3332196**

(43) Veröffentlichungstag der Anmeldung:
**12.06.85 Patentblatt 85/24**

(45) Bekanntmachung des Hinweises auf die Patenterteilung:
**01.04.87 Patentblatt 87/14**

(84) Benannte Vertragsstaaten:
**AT BE CH DE FR GB IT LI LU NL SE**

(56) Entgegenhaltungen:
**DE - A - 2 232 048**
**DE - A - 2 925 453**
**US - A - 3 884 368**

(73) Patentinhaber: **Hermann Spicher GmbH,**
**Waltherstrasse 78, D-5000 Köln 80 (DE)**

(72) Erfinder: **Spicher, Hermann, Forststrasse 7,**
**D-5060 Bergisch Gladbach 1 (DE)**

(74) Vertreter: **Patentanwälte Dipl.-Ing. W. Dahlke Dipl.-Ing.**
**H.-J. Lippert, Frankenforster Strasse 137,**
**D-5060 Bergisch Gladbach 1 (DE)**

**Beschreibung**

Die Erfindung betrifft eine Vorrichtung zur automatischen einzelnen oder gruppenweisen Entnahme von Gegenständen aus Behältern, bestehd aus einem Gestell, unter dem bzw. in dessen Nähe mindestens ein Behälter mit den zu entnehmenden Gegenständen aufstellbar ist, einem an dem Gestell im Bereich über dem Behälter beweglich angeordneten Entnahmearm, einer Einrichtung zum axialen Vor- und Zurückfahren des Entnahmearms sowie einer Einrichtung zur Führung des Greifteils des Entnahmearms zu verschiedenen Bereichen im Inneren des Behälters.

Bekannte automatisch arbeitende Entnahmevorrichtungen der genannten Art weisen einen vertikalstehenden Entnahmearm auf, der in einem Koordinatensystem in einer horizontalen Ebene verfahrbar und in Richtung seiner Längsachse vor- und zurückverschiebbar ist.

Moderne Aufnahmebehälter, insbesondere solche, die für den Transport schwerer Teile sehr stabil ausgebildet sein müssen, weisen einen oberen, zumindest in einigen Bereichen teilweise nach innen gezogenen Rand auf, so dass es mit den bekannten Entnahmevorrichtungen folglich schwierig ist, Gegenstände aus den unteren seitlichen Bereichen und den Ecken zu entnehmen. Es kann daher bei den bekannten Vorrichtungen vorkommen, dass einzelne Gegenstände aus dem Behälter nicht entnommen werden können.

Der Erfindung liegt daher die Aufgabe zugrunde, eine Entnahmevorrichtung der eingangs genannten Art derart weiterzubilden, dass eine zufriedenstellende Entleerung der Behälter gewährleistet ist.

Erfindungsgemäss wird diese Aufgabe durch eine Vorrichtung gelöst, die gekennzeichnet ist durch eine Halterung für den Entnahmearm, die über eine kardanische Aufhängung mit dem Gestell verbunden ist, einen Antrieb zur Längsverschiebung des Entnahmearms relativ zu der Halterung sowie durch weitere Antriebe zur Verschwenkung der Halterung in verschiedenen im Winkel zueinander stehenden Ebenen.

Bei der erfindungsgemässen Vorrichtung ist es möglich, den Entnahmearm schräg in die Ecken bzw. unter den oberen Rand zu führen, so dass sämtliche Bereiche im Behälterinneren für den Entnahmearm gut zugänglich sind. Darüber hinaus ist durch die kardanische Aufhängung des Entnahmearms der konstruktive Aufwand geringer.

Zur Bewegung der Halterung 11 im Bereich der kardanischen Aufhängung sind zwei Antriebe zur Verschwenkung der Halterung in zwei senkrecht zueinander stehenden vertikalen Ebenen vorgesehen.

Die kardanische Aufhängung der Halterung kann eine in dem Gestell gelagerte horizontale schwenkbare Tragachse sowie eine an dieser gelagerte Querachse aufweisen, an der die Halterung aufgehängt ist. An der Tragachse können zu beiden Seiten der Halterung des Entnahmearms starre Tragarme vorgesehen sein, die in der durch die Querachse definierten Schwenkebene der Halterung liegen, wobei zwischen den beiden Tragarmen ein Antrieb zur Verschwenkung der Halterung um die Querachse angeordnet ist. Durch die Art der Aufhängung ist mit relativ einfachen Mitteln eine Bewegung des Entnahmearms in alle vorgesehenen Bereiche möglich.

Als Schwenkantrieb der Halterung um die Querachse kann eine mit Hilfe eines Motors drehbare Gewindespindel vorgesehen sein, auf der eine relativ zu der Halterung nicht drehbar gelagerte Mutter angeordnet ist, die mit der Halterung über eine Mitnehmerstange verbunden ist, wobei beide Verbindungsstellen als Gelenke ausgebildet sind.

Zur Verschwenkung der Halterung um die Tragachse kann ein Antrieb vorgesehen sein, der einerseits an dem Gestell und andererseits an mindestens einen der Tragarme angreift. Als Schwenkantrieb der Halterung um die Tragachse kann eine relativ zu dem Gestell axial feststehende und durch einen Motor antreibbare Gewindespindel vorgesehen sein, auf der eine Mutter sitzt, die über eine Gelenkstange mit dem jeweiligen Tragarm verbunden ist.

Der Entnahmearm ist zweckmässig längsverschieblich an der Halterung geführt, wobei als Antrieb für den Entnahmearm ein mit Hilfe eines Motors über eine Gewindespindel bewegbarer Mitnehmer vorgesehen ist. Vorzugsweise ist der Entnahmearm mit seinem Eigengewicht oben auf dem Mitnehmer abgestützt, so dass beim Auftreffen des Entnahmearms auf einen Widerstand ein Freilaufeffekt entsteht, d.h., dass der Entnahmearm nicht weiter angetrieben wird.

An den Gewindespindeln können Schaltnocken zur Betätigung von Zählschaltern vorgesehen sein, so dass der Entnahmearm durch jeweilige bestimmte Umdrehungszahlen der Gewindespindeln in eine genau vorgegebene Position gebracht werden kann. Vorzugsweise ist der Entnahmearm nach vorgegebenen Programmen steuerbar, wobei das Ein- und Ausschalten der Antriebsmotoren über die Zählschalter erfolgt.

Das jeweilige Programm, nach welchem die den Entnahmearm tragende Halterung bewegt wird, kann auf verschiedene Behältergrössen und -formen und auch auf verschiedene Arten und Gestalten der zu entnehmenden Gegenstände eingestellt werden.

Wenn die Vorrichtung zur Entnahme von magnetisierbaren Gegenständen vorgesehen ist, kann als Greifteil des Entnahmearms ein Elektromagnet vorgesehen sein. Dieser ist vorzugsweise kardanisch aufgehängt.

Die Erfindung ist in der Zeichnung beispielsweise veranschaulicht und im nachstehenden im einzelnen anhand der Zeichnung beschrieben. Es zeigen:

Fig. 1 eine Ansicht einer Vorrichtung zur automatischen einzelnen Entnahme von Gegenständen aus Behältern und

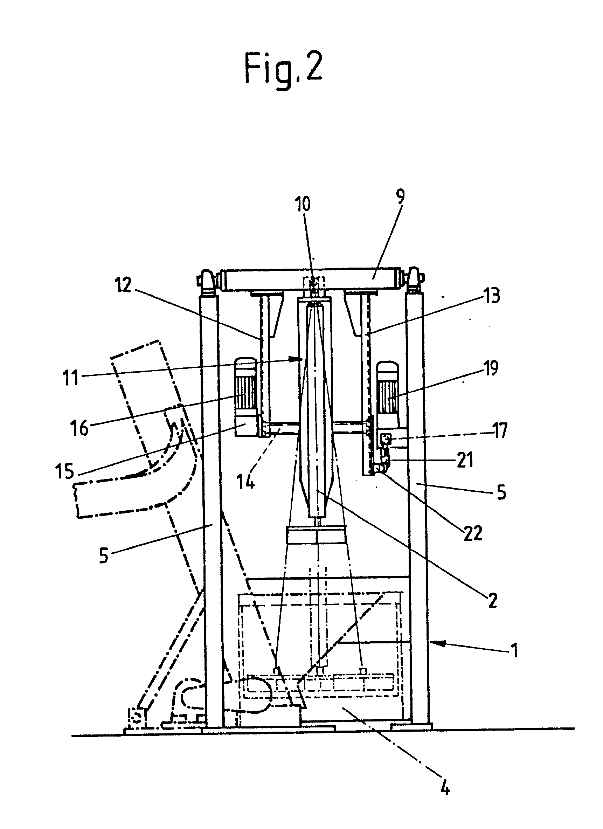

Fig. 2 eine Ansicht der Vorrichtung in Richtung des Pfeiles II aus Fig. 1.

Nach der Zeichnung besteht die automatische Entnahmevorrichtung im wesentlichen aus einem Gestell 1, einem an dem Gestell aufgehängten Entnahmearm 2 sowie im unteren Teil des Gestells 1 unterhalb des Entnahmearms 2 einem Aufnahmebereich 3 für einen zu entleerenden Behälter 4.

Das Gestell 1 besteht aus stabilen Stahlträgern 5 und ist aussen herum mit einer in der Zeichnung nicht näher dargestellten Schutzverkleidung versehen, die zum Einschieben eines Behälters 4 seitlich oder oben geöffnet werden kann.

Innerhalb des Gestells 1 oder auch seitlich daneben kann ein Auffangbehälter 6 für die einzeln aus dem Behälter 4 entnommenen Gegenstände vorgesehen sein. Mit Hilfe eines Schrägaufzugs 7 werden die Gegenstände zu einer Ablaufstrecke 8 gefördert. Alternativ sind auch andere Förder- und Sortiereinrichtungen denkbar.

Zur kardanischen Aufhängung des Entnahmearms 2 dient eine obere Tragachse 9, die oben auf dem Gestell 1 gelagert ist. Etwa in der Mitte der Tragachse 9 ist an dieser eine kurze Querachse 10 gelagert, an der eine Halterung 11 für den Entnahmearm 2 aufgehängt ist. Die Mittellinie der Querachse 10 verläuft genau senkrecht zu der Mittellinie der Tragachse 9.

Auf den gegenüberliegenden Seiten der Mittellinie der Querachse 10 ist in einem Abstand von der Querachse je ein Tragarm 12 bzw. 13 an der Tragachse 9 befestigt. In der Ausgangsposition hängen die Tragarme 12 und 13 ebenso wie der Entnahmearm 2 senkrecht nach unten.

Zwischen den beiden Tragarmen 12 und 13 ist eine Gewindespindel 14 angeordnet, die über ein Untersetzungsgetriebe 15 mit Hilfe eines Elektromotors 16 antreibbar ist. Getriebe und Motor sind dabei an dem Tragarm 12 befestigt. Auf der Gewindespindel 15 sitzt eine in der Zeichnung nicht näher dargestellte Mutter, die relativ zu der Halterung 11 nicht drehbar ist und mit der Halterung über eine Mitnehmerstange verbunden ist, wobei beide Verbindungsstellen als Gelenke ausgebildet sind, so dass beim Verschwenken der Halterung 11 die Höhenunterschiede zwischen den Anlenkpunkten an der Halterung 11 einerseits und der Mutter andererseits ausgeglichen werden können.

Zur Verschwenkung der Halterung 11 um die Tragachse 9 dient eine Gewindespindel 17, die relativ zu dem Gestell 1 feststeht und über ein Untersetzungsgetriebe 18 durch einen Elektromotor 19 antreibbar ist. Von der Gewindespindel 17 sieht man ebenso wie bei der quer zu dieser verlaufenden Gewindespindel 14 lediglich eine diese umgebende äussere Verkleidung. Auf der Gewindespindel 17 sitzt eine Mutter 20, die unten aus der Verkleidung herausragt, so dass von der Mutter 20 nur der untere Bereich sichtbar ist. Die Mutter 20 ist über eine Gelenkstange 21 mit einem Lagerzapfen 22 verbunden, der an der der Gewindespindel 17 zugewandten Seite des Tragarms 13 vorgesehen ist.

An der Halterung 11 ist ferner eine Gewindespindel 23 vorgesehen, die mit Hilfe eines Elektromotors 24 antreibbar ist. Auf der Gewindespindel 23 sitzt eine Mutter 25, an der ein mit dem Entnahmearm 2 zusammenwirkender Mitnehmer 26 angeordnet ist. Der Entnahmearm 2 liegt mit einer Stützplatte 27 auf dem Mitnehmer 26 auf, so dass auf der Stützplatte das Eigengewicht des Entnahmearms 2, eventuell reduziert um ein nicht dargestelltes Eigengewicht, aufliegt. Beim Absenken des Mitnehmers 26 nimmt dieser den Entnahmearm 2 aufgrund seines Eigengewichts mit. Wenn der untere Greifteil 28 auf einen zu entnehmenden Gegenstand stösst, steht der Entnahmearm still, während der Mitnehmer 27 noch ein Stück weiterlaufen kann. Dieser Freilaufeffekt bewirkt, dass der Entnahmearm 2 allenfalls mit seinem Eigengewicht, ggf. abzüglich des vorgesehenen Gegengewichts, auf einen zu entnehmenden Gegenstand aufgesetzt werden kann. Dadurch ist eine äusserst schonende Behandlung der zu entnehmenden Gegenstände gewährleistet.

Wenn magnetisierbare Gegenstände aus dem Behälter 4 entnommen werden sollen, ist der auswechselbar angeordnete Greifteil 28 als Elektromagnet ausgebildet. Dieser ist am unteren Ende des Entnahmearms 2 ebenfalls kardanisch aufgehängt, so dass er bei beliebiger Stellung des Entnahmearms 2 immer genau senkrecht auf einen zu entnehmenden Gegenstand aufgesetzt werden kann.

Die Betätigung der Vorrichtung erfolgt über ein programmierbares, in der Zeichnung nicht dargestelltes Steuergerät. Der Entnahmearm wird dabei so bewegt, dass er den Behälterquerschnitt zeilenweise abtastet, und zwar in jeder Zeile in einer bestimmten Anzahl von Positionen. Die Rasterung ist entsprechend der Grösse der zu entnehmenden Gegenstände einstellbar. Die Abwärtsbewegung des Entnahmearms 2 wird sofort nach dem Aufsetzen des Greifteils 28 beendet. Die Tiefstellung vor der Bodenberührung bei leerwerdendem Behälter ist für alle vorkommenden Tauchtiefen einprogrammiert. Bei jedem Hub kann kontrolliert werden, ob Gegenstände mitgenommen worden sind. Bei Fehlanzeige fährt der Entnahmearm 2 in die nächste einprogrammierte Rasterposition. Positionen, die bei grösster Tauchtiefe als leer erkannt werden, werden nicht mehr angefahren.

Die Steuerung erfolgt über Betätigung der drei Elektromotoren 16, 19 und 24, deren Ein- und Ausschaltzeitpunkte mit Hilfe von Zählschaltern bestimmt werden, die mit Hilfe von auf den Gewindespindeln sitzenden Nocken betätigt werden. Als Elektromotoren werden vorzugsweise Wechselstrombremsmotoren verwendet.

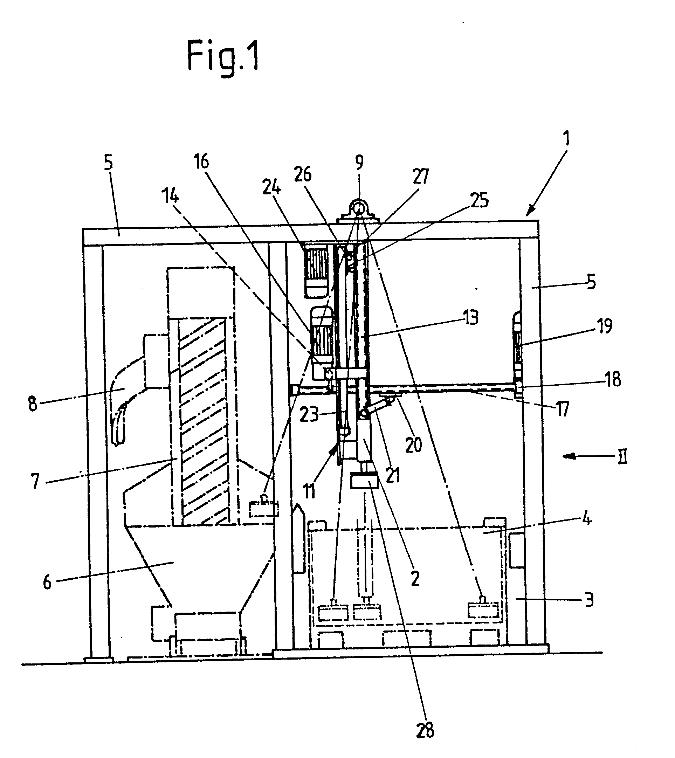

Aufgrund der kardanischen Aufhängung des Entnahmearms 2 kann dieser in alle beliebigen Positionen geschwenkt werden. Da der Entnahmearm über der Behälteröffnung hängt, kann er beim Ansteuern der inneren Randbereiche und Ecken des Behälters stets schräg eingefahren werden, so dass er bequem an dem oberen eingezogenen Behälterrand vorbei in alle Bereiche greifen kann. Wenn der Entnahmearm 2 einen Gegenstand ergriffen hat, kann er, wie in Fig. 1 dargestellt, nach links zur Seite schwenken und den Gegenstand in dem Auffangbehälter 6 ablegen.

Bei dem in der Zeichnung dargestellten Ausführungsbeispiel liegt die kardanische Aufhängung des Entnahmearms 2 nicht unmittelbar über der Mitte des Behälters 4, sondern ist etwas zu der Seite des Auffangbehälters 6 hin verschoben, so dass der seitliche Ausschwenkwinkel nach beiden Seiten voll ausgenutzt und der maximale Ausschwenkwinkel kleingehalten werden kann. Der Ausschwenkwinkel zum Erreichen des Auffangbehälters ist dabei genau so gross wie der Ausschwenkwinkel zum Ansteuern des gegenüberliegenden Randes des Behälters 4.

**Patentansprüche**

1. Vorrichtung zur automatischen einzelnen oder gruppenweisenn Entnahme von Gegenständen aus Behältern, bestehend aus einem Gestell (1), unter dem bzw. in dessen Nähe mindestens ein Behälter (4) mit den zu entnehmenden Gegenständen aufstellbar ist, einem an dem Gestell (1) im Bereich über dem Behälter (4) beweglich angeordneten Entnahmearm (2), einer Einrichtung zum axialen Vor- und Zurückfahren des Entnahmearms (2) sowie einer Einrichtung zur Führung des Greifteils des Entnahmearms zu verschiedenen Bereichen im Inneren des Behälters (4), gekennzeichnet durch eine Halterung (11) für den Entnahmearm (2), die über eine kardanische Aufhängung mit dem Gestell (1) verbunden ist, einen Antrieb (23, 24) zur Längsverschiebung des Entnahmearms (2) relativ zu der Halterung (11) sowie durch weitere Antriebe (14, 16; 17, 19) zur Verschwenkung der Halterung (11) in verschiedenen im Winkel zueinander stehenden Ebenen.

2. Vorrichtung nach Anspruch 1, dadurch gekennzeichnet, dass zwei Antriebe (14, 16; 17, 19) zur Verschwenkung der Halterung (11) in zwei senkrecht zueinander stehenden vertikalen Ebenen vorgesehen sind.

3. Vorrichtung nach Anspruch 1 oder 2, dadurch gekennzeichnet, dass die kardanische Aufhängung der Halterung (11) eine in dem Gestell (1) gelagerte horizontale schwenkbare Tragachse (9) sowie eine an dieser gelagerte Querachse (10) aufweist, an der die Halterung (11) aufgehängt ist.

4. Vorrichtung nach Anspruch 3, dadurch gekennzeichnet, dass an der Tragachse (9) zu beiden Seiten der Halterung (11) des Entnahmearms (2) starre Tragarme (12, 13) vorgesehen sind, die in der durch die Querachse (10) definierten Schwenkebene der Halterung (11) liegen, und dass zwischen den beiden Tragarmen (12, 13) ein Antrieb (14, 16) zur Verschwenkung der Halterung (11) um die Querachse (10) angeordnet ist.

5. Vorrichtung nach Anspruch 4, dadurch gekennzeichnet, dass als Schwenkantrieb der Halterung um die Querachse (10) eine mit Hilfe eines Motors (16) drehbare Gewindespindel (14) vorgesehen ist, dass auf der Gewindespindel (14) eine relativ zu der Halterung (11) nicht drehbar gelagerte Mutter angeordnet ist und dass die Mutter mit der Halterung (11) über eine Mitnehmerstange verbunden ist, wobei beide Verbindungsstellen als Gelenke ausgebildet sind.

6. Vorrichtung nach Anspruch 4 oder 5, dadurch gekennzeichnet, dass zur Verschwenkung der Halterung (11) um die Tragachse (9) ein Antrieb vorgesehen ist, der einerseits an dem Gestell (1) und andererseits an mindestens einem der Tragarme (13) angreift.

7. Vorrichtung nach Anspruch 6, dadurch gekennzeichnet, dass als Schwenkantrieb der Halterung (11) um die Tragachse (9) eine relativ zu dem Gestell (1) axial feststehende und durch einen Motor (19) antreibbare Gewindespindel (17) vorgesehen ist, auf der eine Mutter (20) sitzt, die über eine Gelenkstange (21) mit dem jeweiligen Tragarm (13) verbunden ist.

8. Vorrichtung nach einem der Ansprüche 1 bis 7, dadurch gekennzeichnet, dass der Entnahmearm (2) längsverschieblich an der Halterung (11) geführt ist und dass als Antrieb für den Entnahmearm (2) ein mit Hilfe eines Motors (24) über eine Gewindespindel (23) bewegbarer Mitnehmer (26) vorgesehen ist.

9. Vorrichtung nach Anspruch 8, dadurch gekennzeichnet, dass der Entnahmearm (2) mit seinem Eigengewicht, das ggf. durch ein Gegengewicht reduziert ist, oben auf dem Mitnehmer (26) abgestützt ist.

10. Vorrichtung nach einem der Ansprüche 1 bis 9, dadurch gekennzeichnet, dass an den Gewindespindeln (14, 17, 23) Schaltnocken zur Betätigung von Zählschaltern vorgesehen sind.

11. Vorrichtung nach einem der Ansprüche 1 bis 10, dadurch gekennzeichnet, dass der Entnahmearm (2) nach vorgegebenen Programmen steuerbar ist, wobei das Ein- und Ausschalten der Antriebsmotoren (16, 19, 24) über die Zählschalter erfolgt.

12. Vorrichtung nach Anspruch 11, dadurch gekennzeichnet, dass das jeweilige Programm auf verschiedene Behälterabmessungen und unterschiedliche Formen und Gattungen der zu entnehmenden Gegenstände einstellbar ist.

13. Vorrichtung nach einem der vorhergehenden Ansprüche zur Entnahme von magnetisierbaren Gegenständen, dadurch gekennzeichnet, dass als Greifteil (28) des Entnahmearms (2) ein Elektromagnet vorgesehen ist.

14. Vorrichtung nach Anspruch 13, dadurch gekennzeichnet, dass der Elektromagnet kardanisch aufgehängt ist.

**Claims**

1. A device for automatically taking objects, individually or in groups, from containers, including a stand (1) beneath which or in the vicinity thereof at least one container (4) having the objects to be extracted can be positioned, an extractor arm (2) disposed in a movable manner on the stand (1) in the area above the container (4), a device for the axial extension and retraction of the extractor arm (2), and a device for guiding a grasping element of the extractor arm toward various areas in the interior of the container (4), characterized by a holding means (11) for the extractor arm (2), which is connected to the stand (1) via a cardan joint suspension, a drive means (23, 24) for the longitudinal displacement of the extractor arm (2) relative to the holding means (11), and further drive means (14, 16; 17, 19) for pivoting the holding means (11) in various planes located at angles from one another.

2. A device according to claim 1, characterized in that two drive means (14, 16; 17, 19) for pivoting the holding means (11) in two vertical planes located at right angles to one another are provided.

3. A device according to claim 1 or 2, characterized in that the cardan joint suspension of the holding means (11) includes a horizontal, pivotable supporting beam (9) supported in the stand (1) and a cross beam (10) supported on the supporting beam, on which cross beam the holding means (11) is suspended.

4. A device according to claim 3, characterized in that rigid supporting arms (12, 13) are provided on the supporting beam (9) at both sides of the holding means (11) of the extractor arm (2) which arms are located in the pivoting plane, defined by the cross beam (10), of the holding means (11), and that a drive means (14, 16) for pivoting the holding means (11) about the cross beam (10) is disposed between the two supporting arms (12, 13).

5. A device according to claim 4, characterized in that a threaded spindle means (14) which is rotatable with the aid of a motor (16) is provided as the pivoting drive means of the holding means about the cross beam (10), that a nut supported such that it is not rotatable relative to the holding means (11) is disposed on the threaded spindle (14), and that the nut is connected to the holding means (11) via a carrier rod, both connection points being embodied as articulated joints.

6. A device according to claim 4 or 5, characterized in that for pivoting the holding means (11) about the supporting beam (9) a drive means is provided which at one end engages the stand (1) and at the other end engages at least one of the supporting arms (13).

7. A device according to claim 6, characterized in that a threaded spindle (17) which is axially stationary relative to the stand (1) and is drivable by a motor (19) is provided as the pivoting drive means of the holding means (11) about the supporting means (9), on which threaded spindle a nut (20) is positioned which is connected with the respective supporting arm (13) via a toggle link (21).

8. A device according to one of the claims 1 to 7, characterized in that the extractor arm (2) is guided such that it is longitudinally displaceable on the holding means (11), and that a carrier (26) movable with the aid of a motor (24) via a threaded spindle (23) is provided as the drive means for extractor arm (2).

9. A device according to claim 8, characterized in that the extractor arm (2) is supported by its own weight, which is optionally reduced by a counterweight, on the carrier (26).

10. A device according to one of the claims 1 to 9, characterized in that trip cams for actuating counting switches are provided on the threaded spindles (14, 17, 23).

11. A device according to one of the claims 1 to 10, characterized in that the extractor arm (2) is controllable in accordance with prespecified programs, whereupon the switching on and off of the drive motors (16, 19, 24) is effected via the counting switches.

12. A device according to claim 11, characterized in that the respective program is adjustable to various container dimensions and different shapes and types of objects to be extracted.

13. A device according to one of the previous claims for the extraction of magnetizable objects, characterized in that an eletro-magnet is provided as the grasping element (28) of the extractor arm (2).

14. A device according to claim 13, characterized in that the electro-magnet is suspended by a cardan joint.

**Revendications**

1. Dispositif pour le prélèvement automatique d'objets dans des récipients, individuellement ou par lots, se composant d'un bâti (1) au-dessous duquel ou a proximité duquel peut être installé au moins un récipient (4) contenant les objets à prélever, d'un bras de prélèvement (2) monté sur le bâti (1) de façon à pouvoir se déplacer dans la région au-dessus du récipient (4), d'un dispositif pour faire avancer et reculer axialement le bras de prélèvement (2), ainsi que d'un dispositif pour le guidage de l'organe de préhension du bras de prélèvement vers différentes régions à l'intérieur du récipient (4), caractérisé par un support (11) pour le bras de préhension (2), support qui est relié au bâti (1) par une suspension à la Cardan, par un mécanisme de commande (23, 24) pour le déplacement longitudinal du bras de préhension (2) par rapport au support (11), ainsi que par d'autres mécanismes de commande (14, 16; 17, 19) pour faire le support (11) dans différents plans formant des angles entre eux.

2. Dispositif selon la revendication 1, caractérisé en ce que deux mécanismes de commande (14, 16; 17, 19) sont prévus pour faire pivoter le support (11) dans deux plans verticaux perpendiculaires l'un à l'autre.

3. Dispositif selon la revendication 1 ou 2, caractérisé en ce que la suspension à la Cardan du support (11) comporte un axe porteur pivotant horizontal (9) monté dans le bâti (1), ainsi qu'un axe transversal (10) qui est monté à rotation sur lui et auquel est suspendu le support (11).

4. Dispositif selon la revendication 3, caractérisé en ce qu'il est prévu sur l'axe porteur (9), de part et d'autre du support (11) du bras de préhension (2), des bras porteurs rigides (12, 13) qui sont situés dans le plan de pivotement du support (11) défini par l'axe transversal (10), et en ce qu'il est disposé, entre les deux bras porteurs (12, 13), un mécanisme de commande (14, 16) pour faire pivoter le support (11) autour de l'axe transversal (10).

5. Dispositif selon la revendication 4, caractérisé en ce qu'il est prévu, en tant que mécanisme de commande de pivotement du support autour de l'axe transversal (10), une tige filetée (14) qui peut être mise en rotation au moyen d'un moteur (16), en ce qu'il est monté, sur la tige filetée (14), en écrou monté sans possibilité de rotation par rapport au support (11), et en ce que l'écrou est relié au support (11) par une tige d'entraînement, les deux points de jonction étant réalisés sous forme d'articulations.

6. Dispositif selon la revendication 4 ou 5, caractérisé en ce qu'il est prévu, pour faire pivoter le support (11) autour de l'axe porteur (9), un mécanisme de commande qui attaque d'une part le bâti (1) et, d'autre part, l'un au moins des bras porteurs (13).

7. Dispositif selon la revendication 6, caractérisé en ce qu'il est prévu, en tant que mécanisme de pivotement du support (11) autour de l'axe porteur (9), une tige filetée (17) qui est fixe axialement par rapport au bâti (1) et peut être entraînée par un moteur (19) et sur laquelle est monté un écrou (20) qui est raccordé par une barre articulée (21) au bras porteur correspondant (13).

8. Dispositif selon l'une quelconque des revendications 1 à 7, caractérisé en ce que le bras de préhension (2) est guidé sur le support (11) de manière déplaçable longitudinalement et en ce qu'il est prévu, comme mécanisme de commande pour le bras de préhension (2), un toc d'entraînement (26) qui est mobile au moyen d'un moteur (24) par l'intermédiaire d'une tige filetée (23).

9. Dispositif selon la revendication 8, caractérisé en ce que le bras de préhension (2) prend appui sur le haut du toc d'entraîement (26) sous l'effet de son propre poids, qui est éventuellement réduit par un contrepoids.

10. Dispositif selon l'une quelconque des revendications 1 à 9, caractérisé en ce qu'il est prévu, sur les tiges filetées (14, 17, 23), des cames de contacteur pour l'actionnement de commutateurs compteurs.

11. Dispositif selon l'une quelconque des revendications 1 à 10, caractérisé en ce que le bras de préhension (2) peut être commandé suivant des programmes prédéfinis, la mise en marche et l'arrêt des moteurs de commande (16, 19, 24) s'effectuant au moyen des commutateurs compteurs.

12. Dispositif selon la revendication 11, caractérisé en ce que le programme en vigueur peut être réglé sur des dimensions différentes des récipients et des formes et des natures différentes des objets à prélever.

13. Dispositif selon l'une quelconque des revendications 1 à 12 pour le prélèvement d'objets aimantables, caractérisé en ce qu'un électroaimant est prévu en tant qu'organe de préhension (28) du bras de prélèvement (2).

14. Dispositif selon la revendication 13, caractérisé en ce que l'électroaimant est suspendu a la Cardan.

# Fig.1

# Fig.2